# EUROPÄISCHE PATENTSCHRIFT

(11) **EP 0 718 522 B1**
(45) Veröffentlichungstag und Bekanntmachung des Hinweises auf die Patenterteilung: **18.06.2003**
(21) Anmeldenummer: 95117986.0
(22) Anmeldetag: 15.11.1995
(51) Int. Cl.: F16F 9/04

(54) **Spannringbefestigung für einen Schlauchrollbalg einer Luftfeder**
Connection of a clamping ring for a tubular rolling-lobe of an airspring
Connexion d'un anneau de pression pour un soufflet roulant tubulaire d'un ressort pneumatique

(30) Priorität: 22.12.1994 DE 4445902
(43) Veröffentlichungstag der Anmeldung: 26.06.1996
(73) Patentinhaber: Continental Aktiengesellschaft, 30165 Hannover (DE)
(72) Erfinder: Hasselbring, Bernd, Dipl.-Ing., D-30449 Hannover (DE)
(74) Vertreter: Patentanwälte Thömen & Körner

(56) Entgegenhaltungen:
- EP-A- 0 151 696
- EP-A- 0 278 737
- GB-A- 1 254 361
- US-A- 2 979 104
- US-A- 5 374 037
- PATENT ABSTRACTS OF JAPAN vol. 012, no. 416 (M-759), 4.November 1988 & JP-A-63 154238 (YOSHIKI ASANO;OTHERS: 03), 27.Juni 1988,

## Beschreibung

Die Erfindung betrifft eine Luftfeder mit einem Schlauchrollbalg aus elastomerem Werkstoff, der mit mindestens einem Endabschnitt mittels eines radial plastisch verformten metallischen Spannrings an einem Anschlußteil dicht befestigt ist.

Gegenüber den für höhere Belastungen in größeren Fahrzeugen mit Dichtwülsten und darin eingebetteten formsteifen Kernringen versehenen üblichen Luftfederbälgen bieten die hauptsächlich für den Einsatz in Personenkraftfahrzeugen vorgesehenen einfach-zylindrischen Schlauchrollbälge den Vorteil besonders kostengünstiger Herstellung mit der Möglichkeit, sie durch einfaches mechanisches Abtrennen von größeren Schlauchlängen zu gewinnen. Für die Befestigung der wulstlosen Endabschnitte des Schlauchrollbalges an den mit dem Fahrgestell bzw. der Fahrzeugachse verbundenen Anschlußteilen haben sich geschlossene, radial plastisch verformbare Spannringe bewährt. Durch das radiale Verformen der Spannringe werden die Endabschnitte der Schlauchrollbälge reibschlüssig verspannt. Eine derartige Spannringbefestigung eines Schlauchrollbalges ist aus der EP-A-0 151 696 bekannt.

Die Spannringe werden durch Absägen oder Abstechen von metallischen Rohren oder Rohrstücken gewonnen. Dabei wird der gewünschte Spannringdurchmesser durch Auswahl des entsprechenden Rohrdurchmessers bestimmt. Unterschiedliche Spannringdurchmesser erfordern daher die Vorhaltung einer entsprechenden Vielzahl von Rohren mit unterschiedlichen Durchmessern.

Der Erfindung liegt die Aufgabe zugrunde, die Spannringbefestigung bei Luftfedern mit unterschiedlichem Durchmesser unter geringerem logistischem und konstruktivem Aufwand zu ermöglichen, wobei die Beschränkung auf eine begrenzte Durchmesseranzahl vermieden ist.

Die Aufgabe wird erfindungsgemäß dadurch gelöst, daß der Spannring aus einem kreisförmig gebogenen Flachstahlabschnitt besteht, dessen aneinanderstoßende Enden stumpfgeschweißt sind.

Flachstahl weist einen rechteckigen Querschnitt auf. Wird der Flachstahl zu einem Ring gerollt und anschließend an seinen Enden stumpf verschweißt, liegt ein geschlossener Spannring vor, der in üblicher Weise radial plastisch verformbar ist.

Die Herstellung des Spannringes aus einem laufenden Flachstahl erlaubt die Anpassung auf beliebig große Durchmesser. Dadurch fällt das Vorhalten von unterschiedlich großen Halbzeugen, d.h. Rohren weg, was die Logistik in der Herstellung von Luftfedern wesentlich vereinfacht. Aus dem Halbzeug Flachstahl kann eine Vielzahl von verschiedenen Spannringdurchmessern gefertigt werden. Dadurch wird der Nachteil überwunden, daß bei der Spannringfertigung aus Rohrstücken die Verfügbarkeit nur bestimmter Rohrdurchmesser die Konstruktionen einschränkt. Bei der Fertigung von geschweißten Spannringen ist jeder beliebige Spannringdurchmesser realisierbar. Damit bestimmt nicht mehr der Durchmesser der Halbzeuge Rohr die Konstruktion sondern der jeweilige Einsatzfall. Der jeweilige gewünschte Spannringdurchmesser wird durch entsprechendes Ablängen eines Flachstahlabschnittes realisierbar.

## Patentansprüche

1. Luftfeder mit einem Schlauchrollbalg aus elastomerem Werkstoff, bei dem mindestens ein Endabschnitt mittels eines radial plastisch verformten metallischen Spannringes an einem Anschlußteil dicht befestigt ist,
**dadurch gekennzeichnet,**
**daß** der Spannring aus einem kreisförmig gebogenen Flachstahlabschnitt besteht, dessen aneinanderstoßende Enden stumpfgeschweißt sind.

## Claims

1. Pneumatic spring with a hose roll bellows made from elastomeric material, in which at least one end section is tightly fixed by means of a radially plastically deformed, metallic lock ring to a connection part, **characterized in that** the lock ring comprises a circularly bent flat steel section, whose abutting ends are butt welded.

## Revendications

1. Coussin d'air avec un soufflet en forme de boudin en matière élastomère, dont au moins une partie extrême est fixée de manière étanche à une pièce de raccordement au moyen d'un collier tendeur métallique déformé plastiquement dans le sens radial, **caractérisé en ce que** le collier tendeur est réalisé dans un segment d'acier plat cintré de manière circulaire, dont les extrémités sont soudées bout à bout.
